**Europäisches Patentamt**

(19) **European Patent Office**

**Office européen des brevets**

(11) Numéro de publication : **0 218 521 B1**

## FASCICULE DE BREVET EUROPEEN

(12)

(45) Date de publication du fascicule du brevet :
**13.03.91 Bulletin 91/11**

(51) Int. Cl.$^5$ : **H02K 41/03, H02K 37/08**

(21) Numéro de dépôt : **86402111.8**

(22) Date de dépôt : **26.09.86**

(54) **Moteur électrique polyphasé à réluctance variable.**

(30) Priorité : 27.09.85 FR 8514363
27.09.85 FR 8514365

(43) Date de publication de la demande :
**15.04.87 Bulletin 87/16**

(45) Mention de la délivrance du brevet :
**13.03.91 Bulletin 91/11**

(84) Etats contractants désignés :
**AT BE CH DE FR GB IT LI LU NL SE**

(56) Documents cités :
**CH-A- 196 052
FR-A- 2 152 529
FR-A- 2 259 472
GB-A- 137 255
US-A- 2 797 346
US-A- 3 992 641
SOVIET INVENTIONS ILLUSTRATED, semaine
B28, 22 août 1979, Derwent Publications Ltd.,
Londres, GB; & SU-A-625 291 (BYKOV) 00-
03-1977
PATENTS ABSTRACTS OF JAPAN, vol. 5, no.
51 (E-51)[723], 10 avril 1981; & JP-A-56 3570
(YOKOGAWA DENKI SEISAKUSHO K.K.) 14-
01-1981**

(56) Documents cités :
**PATENTS ABSTRACTS OF JAPAN, vol. 7, no.
222 (E-201)[1367], 4 octobre 1983; & JP-A-58
112 454 (KOUKUU UCHIYUU GIJUTSU KEN-
KYUSHO) 04-07-1983**

(73) Titulaire : **CENTRE NATIONAL DE LA
RECHERCHE SCIENTIFIQUE (CNRS)
15, Quai Anatole France
F-75007 Paris (FR)**

(72) Inventeur : **Rioux, Christian
10 rue Emile Morel
F-92330 Sceaux (FR)**
Inventeur : **Guillet, Roger
Résidence Agate 19 rue Bobillot
F-75644 Paris Cedex 13 (FR)**
Inventeur : **Roche, Jean
27 résidence Croix Blanche
F-91380 Chilly Mazarin (FR)**
Inventeur : **Lucidarme, Jean
88 Rue Pasteur
F-91700 Sainte Genevieve des Bois (FR)**
Inventeur : **Pouillange, Jean
7 Allée des Sylphides
F-77410 Gressy en France (FR)**

(74) Mandataire : **Fort, Jacques et al
CABINET PLASSERAUD 84, rue d'Amsterdam
F-75009 Paris (FR)**

# Description

La présente invention concerne les moteurs électriques polyphasés à réluctance variable comportant un noyau ferromagnétique mobile dans un stator muni de m enroulements (m étant au moins égal à 3) permettant chacun de créer un flux magnétique dans le sens de déplacement du noyau mobile et une source permettant d'alimenter les enroulements avec un déphasage de $2\pi/m$, chaque enroulement étant associé à un circuit ferromagnétique propre se refermant par le noyau. Elle trouve une application particulièrement importante, bien que non exclusive, constituée par les actionneurs linéaires fournissant une poussée élevée.

Un type particulier de moteur linéaire a fait l'objet d'une description dans le document SU-A-625 291.

Toutefois le type de moteur décrit dans ce document correspond à un moteur pas à pas et fait intervenir un champ magnétique transverse, perpendiculaire au déplacement de l'élément mobile.

Il comporte deux aimants permanents et deux circuits d'alimentation fonctionnant alternativement avec des polarités inverses, à partir d'une alimentation continue, engendrant des courants induits dans deux circuits statoriques différents.

Un autre type de moteur pas à pas, rotatif, a également été décrit par le document US-A-2 797 346. Le moteur décrit par ce document peut être rapproché du moteur décrit dans le document précédemment cité, car il fait également intervenir un champ magnétique transverse perpendiculaire au déplacement des plots.

Un tel type de moteur pas à pas n'est pas particulièrement bien adapté à la création de forces de déplacement spécifiques.

L'invention vise notamment à fournir un tel moteur électrique permettant d'obtenir une force spécifique, c'est-à-dire par unité de masse de matériau ferromagnétique, plus importante que dans les dispositifs électromagnétiques existants.

Dans ce but, l'invention propose un moteur électrique du type ci-dessus défini dont le noyau comporte plusieurs lames ferromagnétiques minces, parallèles au sens de déplacement, et fractionnées chacune dans le sens longitudinal en plots avec un pas déterminé p et en ce que le circuit ferromagnétique de chaque enroulement comporte également plusieurs lames minces alternant avec celles du noyau, imbriquées avec elles et également fractionnées en plots au même pas p que celui des plots du noyau.

Dans l'une des réalisations possibles de l'invention, les plots du stator comprennent avantageusement des aimants permanents.

Les plots du stator sont, par exemple, constitués d'une bande ferromagnétique et de deux aimants longitudinaux d'aimantation inverse accolés de part et d'autre de la bande. Chaque plot est séparé l'un de l'autre par une partie ferromagnétique qui peut avoir la même longueur dans le sens du déplacement du noyau mobile que la longueur de la bande ferromagnétique du plot lui-même.

Les aimants successifs appartenant à deux plots différents sont d'aimantation alternée.

Dans l'application de l'invention à un moteur électrique linéaire, diverses constitutions des lames portées par l'élément mobile ou par le stator sont possibles. Dans un premier mode de réalisation, les lames de l'élément mobile sont portées par une âme commune en matériau non ferromagnétique, par exemple en acier inoxydable, constituant un poussoir ; les enroulements sont associés chacun à un jeu de lames ferromagnétiques du stator, les lames d'un jeu présentant un décalage de p/m par rapport à un autre jeu. Dans un autre mode de réalisation, avantageux du point de vue de la fabrication, chaque lame est constituée par une alternance de métal ferromagnétique et de métal amagnétique. On peut notamment utiliser une alternance de plages en acier au silicium, ou à défaut en fer doux, et d'acier inoxydable. La fabrication de lames identiques pourra être effectuée en brasant sous vide, à une température de l'ordre de 550°, des plots alternés constitués d'acier au silicium et de matériaux ferromagnétiques. Ensuite la barre ainsi constituée est tronçonnée longitudinalement pour donner des lames dont l'épaisseur peut aisément être réduite à 1 mm environ.

Dans le cas où les plots du stator comprennent des aimants permanents, la fabrication des lames du stator pourra être effectuée à partir d'un profil en acier amagnétique sur lequel sont apposées de part et d'autre deux plaques d'acier magnétique.

On usine ensuite des saignées dans lesquelles sont collés les aimants avec leur aimantation alternée.

Dans l'application de l'invention à la réalisation d'une machine tournante, les enroulements peuvent être prévus pour être parcourus par un courant alternatif uniquement (cas d'un actionneur tournant). Les bobines peuvent également être fractionnées en deux groupes, l'un parcouru par du courant continu, l'autre par du courant alternatif ou même les deux courants peuvent être superposés dans les mêmes enroulements. ·

L'invention sera mieux comprise à la lecture de la description qui suit d'un mode particulier de réalisation, donné à titre d'exemple non limitatif. La description se réfère aux dessins qui l'accompagnent, dans lesquels :

    – la Figure 1 est un schéma de principe montrant les plots fixes et mobiles d'un actionneur linéaire constituant un premier mode de mise en oeuvre de l'invention,

    – les Figures 2 et 3, sont des schémas montrant deux dispositions d'équilibre que peuvent prendre les lames dans le dispositif,

    – la Figure 4 est une vue simplifiée, en élévation et en coupe partielle, montrant la constitution d'ensemble d'un actionneur linéaire constitué suivant le principe montré en Fig. 1,

– la Figure 5 est une vue en perspective d'une fraction d'un actionneur du type montré en Figure 4,

– la Figure 6 est une vue schématique d'une fraction d'un actionneur rotatif suivant un autre mode de réalisation de l'invention, en coupe suivant un plan passant par l'axe,

– la Figure 7 est une coupe suivant la ligne VII-VII de la Fig. 6,

– la Figure 8 montre, en coupe suivant un plan passant par l'axe de déplacement, les parties principales d'un actionneur linéaire constituant une variante de celui de la Figure 4,

– la Figure 9 est une vue en coupe suivant la ligne IX-IX de la Figure 8,

– la Figure 10 montre une lame de stator utilisable dans l'actionneur de la Figure 8, en coupe transversale.

– la Figure 11 montre une lame de stator d'un moteur polyphasé selon l'invention avec aimants,

– la Figure 12 est une vue en coupe, suivant un plan passant par l'axe de déplacement, des parties principales d'un actionneur linéaire à aimant selon l'invention ne comportant que deux bobinages.

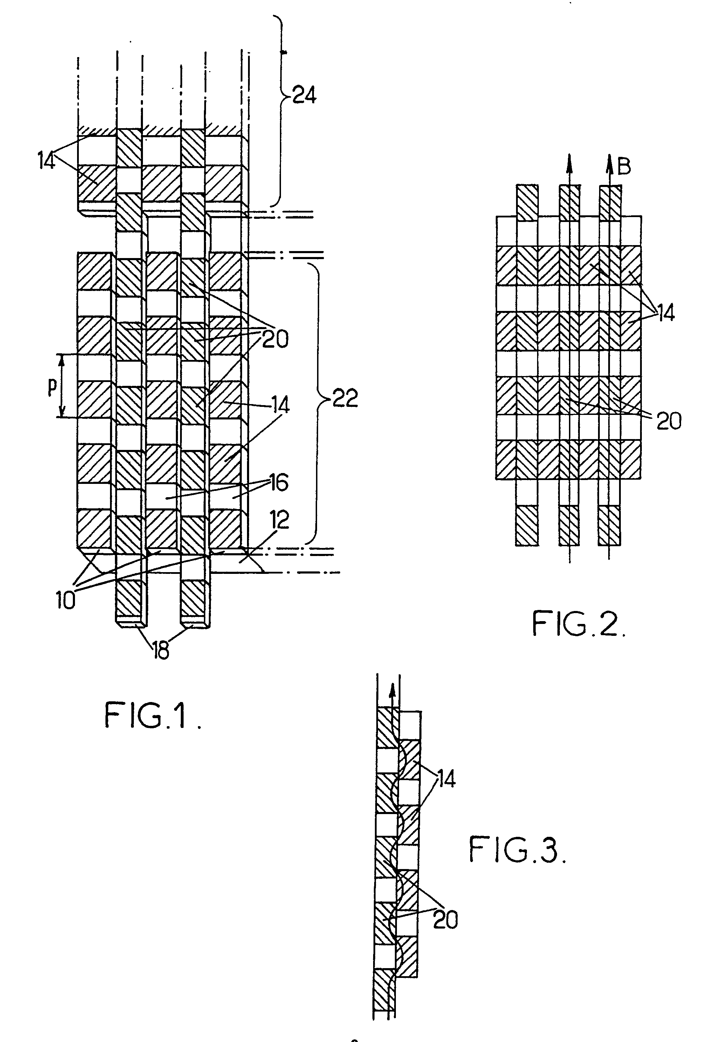

La Figure 1 montre schématiquement les éléments ferromagnétiques, susceptibles de déplacement relatif, d'un actionneur linéaire constituant un mode particulier de réalisation d'un moteur électrique à réluctance variable suivant l'invention. Le stator de cet actionneur comporte un nombre important de lames statoriques parallèles 10, solidarisées les unes des autres par des moyens de support 12 en matériau non ferromagnétique. Trois lames 10 seulement sont montrées sur la Fig. 1 mais dans la pratique le nombre sera nettement plus élevé. Chacune des lames 10 est fractionnée en plots indépendants 14 répartis à intervalles réguliers, avec un pas de répétition p. Des zones isolantes 16 seront en général prévues entre les plots pour améliorer la tenue mécanique de la lame et ces zones seront plus courtes que les plots dans le sens du déplacement.

La partie mobile de l'actionneur est constituée par un noyau présentant lui aussi plusieurs lames 18 parallèles, imbriquées avec les lames statoriques 10 et également constituées de plots 20 séparés, répartis avec le même pas p que les plots 14. Les lames 18 sont réunies par des moyens non représentés et leur longueur doit être supérieure à celle des lames 10, l'excès de longueur fixant l'amplitude possible de déplacement de lames. Les jeux entre lames adjacentes 18 et 10 sont aussi réduits que possible.

L'ensemble constitué du stator et du noyau présente deux positions d'équilibre dans un champ B dirigé dans le sens des lames. L'une d'elles, montrée en Fig. 2, est une position en conjonction d'équilibre instable et correspond à la réluctance maximale du circuit magnétique parcouru par les lignes de force d'un champ créé par un enroulement extérieur non représenté. La seconde position d'équilibre (Fig. 3) est stable et correspond à une disposition en quinconce des plots 14 et 20.

Si le champ magnétique B est appliqué alors que les plots 20 ont légèrement dépassé la position d'équilibre instable où ils sont en conjonction (Fig. 2) pour arriver par exemple dans la disposition montrée en Fig. 1, l'induction magnétique tend à amener les plots dans la position de flux maximum montrée en Fig. 3 : les lames 18 du noyau se déplacent alors jusqu'à ce que les plots soient dans la position en quinconce, ou d'opposition montrée en Fig. 3. Si on coupe alors le champ d'induction B, la lame reste dans la nouvelle position.

Lorsqu'on veut exercer un effort de propulsion du noyau permanent et pouvoir commander le sens de déplacement du noyau, il suffit de prévoir un nombre n, supérieur ou égal à 3, de modules successifs tel que le module 22 du stator (cf. Fig. 1) qui vient d'être décrit. Les différents modules peuvent être placés en série ou en parallèle. Sur la Fig. 1 a été représentée une fraction d'un second module 24 du stator, en série avec le premier. Les enroulements de création du flux seront alimentés par des courants d'excitation déphasés de T/n, T étant la période du courant d'alimentation. Et les plots 14 de deux stators successifs seront décalés de p/n.

En donnant aux plots 14 une forme de lamelle dont la hauteur est nettement supérieure (généralement au moins d'un ordre de grandeur) à l'épaisseur, on constitue une machine polyphasée présentant un grand nombre de surfaces actives. Le calcul numérique effectué par décomposition en éléments finis montre que les efforts électromagnétiques engendrés par unité de surface utile sont du même ordre de grandeur que ceux obtenus dans les dispositifs à réluctance variable d'autre type. En conséquence, on peut, en multipliant le nombre de lames et de plots pour disposer d'une grande surface utile, arriver à des poussées spécifiques (par unité de masse de matériau ferromagnétique) nettement accrues et arriver, à poids égal, à des poussées comparables à ceux des dispositifs à pression de fluide.

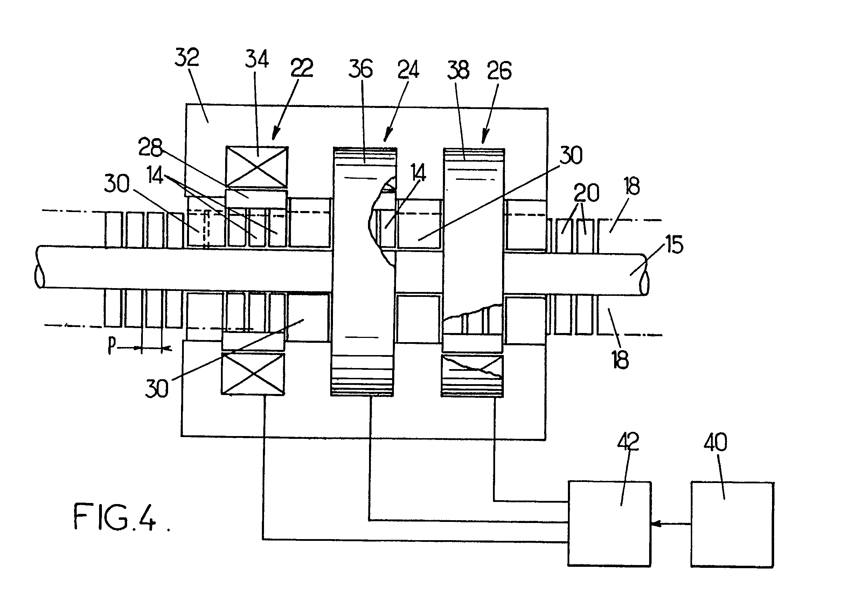

La Fig. 4 montre une constitution possible d'un actionneur linéaire triphasé correspondant au schéma de la Fig. 1. Pour cette raison, les organes de la Fig. 4 déjà montrés en Fig. 1 sont désignés par le même numéro de référence.

Le noyau mobile de l'actionneur comporte une âme non magnétique 15, par exemple en acier inoxydable, qui porte deux séries de lames 18, chaque série ayant par exemple cinq lames. Les lames ont une faible épaisseur, avantageusement de l'ordre du millimètre. Elles sont en matériau magnétique et fixées de façon permanente sur l'âme 15, par exemple par encastrement et brasage à l'argent. Les lames sont découpées en plots 20 régulièrement espacés, les plots des deux séries se faisant face. Le pas de répartion des plots 20 (longueur suivant le sens de déplacement augmenté de l'intervalle entre deux plots successifs) sera en général compris entre 0,5 et 4 fois l'épaisseur de la lame. On voit que les plots prennent ainsi la forme de lamelles minces. Les intervalles entre lamelles successives peuvent être remplis d'isolant.

Le stator comprend deux parties symétriques par rapport à l'axe du poussoir à trois modules 22, 24, et 26. Ces modules étant identiques, seul le module 22 sera décrit. Dans le module 22, chaque partie du stator comporte une pièce support 28 en matériau amagnétique sur laquelle sont brasés les plots correspondants 14. La longueur des supports 28 détermine la zone utile de l'actionneur. Les lames prévues dans les trois zones utiles sont séparées par des lames supplémentaires 30 également fixes mais non fractionnées en plots. Ces lames 30 permettent de compléter le circuit magnétique d'une carcasse 32 sur laquelle sont montés des enroulements 34, 36 et 38 appartenant respectivement aux modules 22, 24, et 26. Toutes les tôles constituant la carcasse 32 sont en matériau ferromagnétique. Une tôle sur deux fait saillie dans l'intervalle qui sépare deux lames successives appartenant au stator et vient se terminer à proximité immédiate de la lame du noyau correspondante. On voit que cette disposition permet d'utiliser la totalité de la section droite de la carcasse pour transmettre le flux, alors qu'une fraction seulement de l'encombrement au niveau des lames statoriques est utilisée pour transmettre le flux. Cette disposition permet de diminuer notablement l'encombrement de la carcasse.

Les lames statoriques du module 24 sont décalées de p/n par rapport à celles du module 22 et du module 26.

Les enroulements 34, 36 et 38 sont associés à un circuit d'alimentation qui peut comporter une source 40 de courant continu et un hacheur 42 fournissant aux enroulements des impulsions cycliques à intervalles réguliers. Ce hacheur peut être commandé par un capteur de déplacement du noyau.

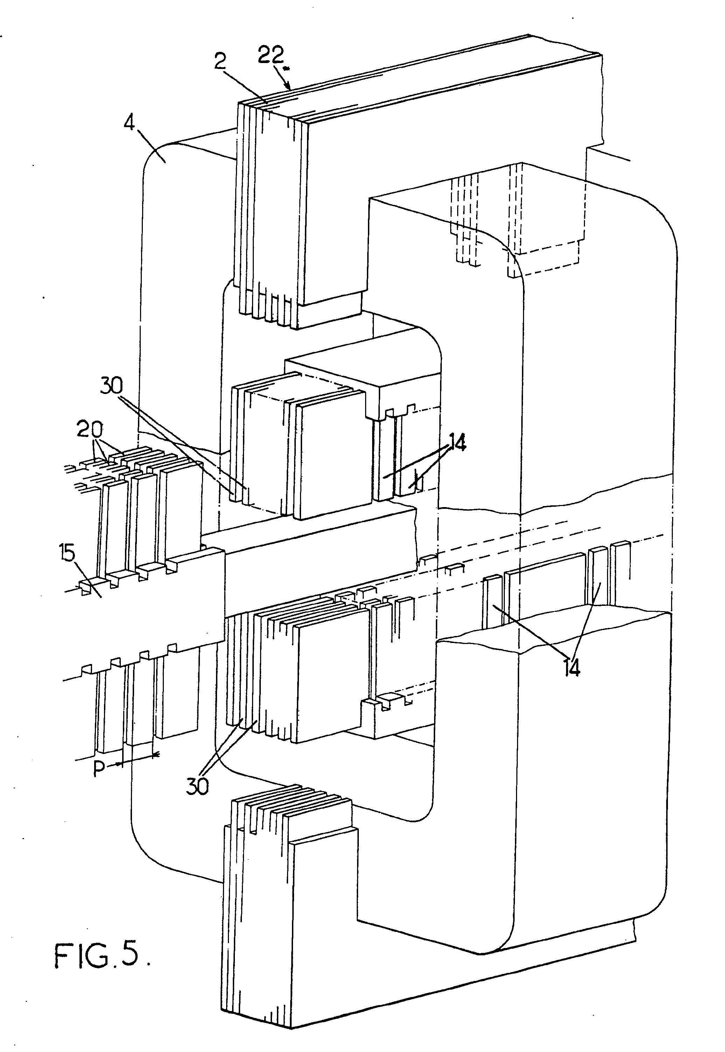

La Fig. 5 montre un seul enroulement inducteur 34 porté par le circuit de fermeture du champ d'excitation, constitué par une carcasse 32 en tôles empilées. Ces tôles ont une épaisseur correspondant à celle des lames et s'imbriquent dans les lames 30 non découpées appartenant au stator pour assurer une meilleure circulation du flux. Les lames 30 ont en conséquence une hauteur supérieure à celles des lames 14. Enfin, la carcasse est montée dans un bâti non représenté portant des glissières de guidage du noyau.

On voit que l'on peut rendre la plage de déplacement aussi importante qu'on le souhaite, simplement en augmentant la longueur des lames 18. Pour éviter d'arriver à des longueurs réduisant la rigidité, on peut également disposer plusieurs actionneurs bout à bout ou en parallèle.

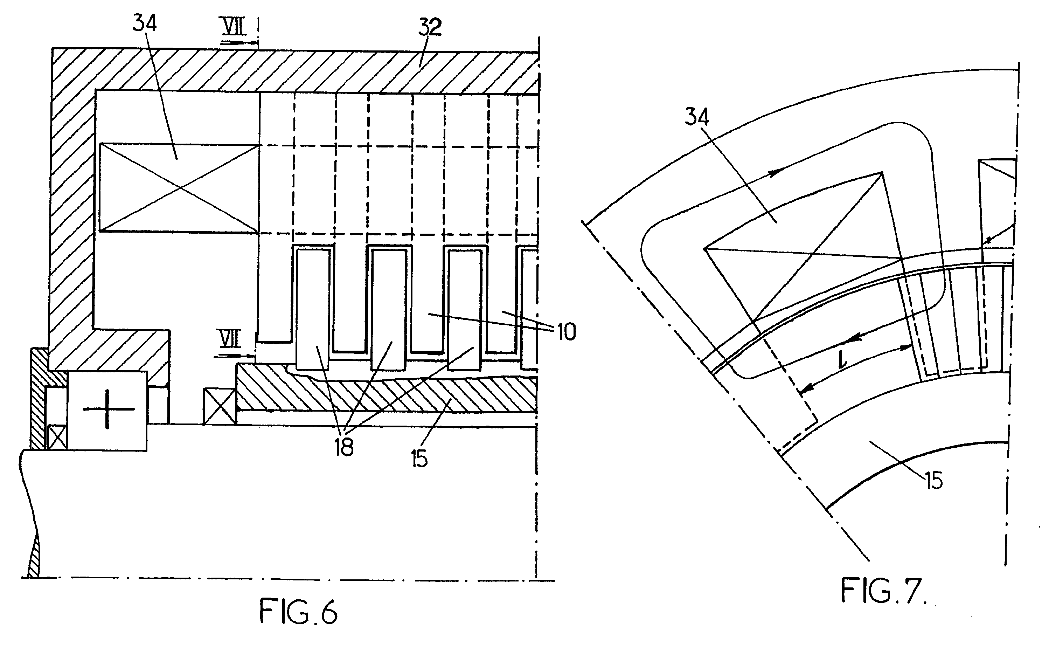

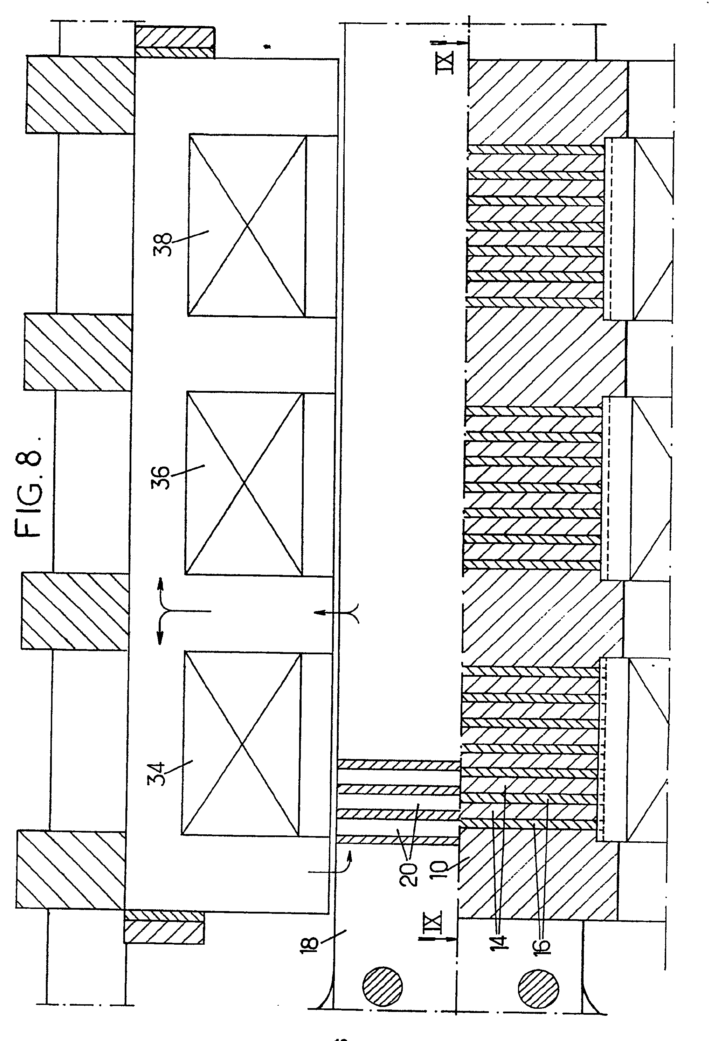

L'invention permet également de réaliser des machines tournantes à champ azimutal, simplement en refermant la structure linéaire qui vient d'être décrite. Les Fig. 6 et 7 montrent une constitution possible d'une telle machine. Les lames prennent alors la forme de disques parallèles métalliques. La Fig. 6 montre de telles lames 10 appartenant au stator, alternant avec des lames 18, également en forme de disque, appartenant au noyau, formé par un rotor. Le circuit de retour est encore constitué par une carcasse 32. La Fig. 7 montre la forme prise par les lignes de champ B lorsque les plots des lames sont en conjonction dans la zone de développement circonférentiel 1 où se produisent les variations de réluctance. Cette disposition, comme la précédente, est susceptible d'être modifiée pour obtenir un effet Vernier. Dans les modes de réalisation décrits ci-dessus, les lamelles sont séparées par des zones amagnétiques constituées par de l'air. Si du point de vue électromagnétique on arrive à une structure tout à fait satisfaisante, la fabrication est complexe. On décrira maintenant, en faisant référence aux figures 8 à 10, un actionneur linéaire constituant une variante, dont les lames statoriques et rotoriques ont une constitution plus simple à fabriquer.

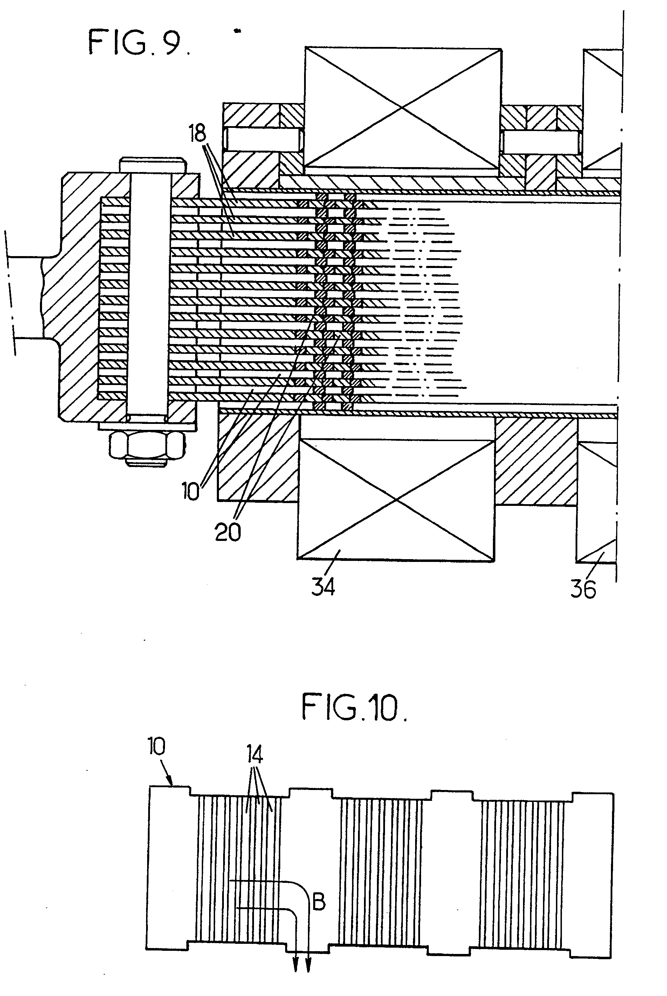

On voit sur les Figures 8 et 9, où les organes correspondant à ceux des figures 4 à 6 sont désignés par les mêmes numéros de références, que les lames du noyau sont formées par une alternance de lamelles ferromagnétiques (en fer au silicium par exemple) et de lamelles amagnétiques (en acier inoxydable par exemple) qui remplacent les intervalles occupés par de l'air dans le mode de réalisation précédent. Les lamelles ferromagnétiques auront généralement une longueur dans le sens du déplacement approximativement double de la longueur des lamelles amagnétiques. L'épaisseur des lamelles sera généralement du même ordre que la longueur des lamelles amagnétiques.

La fabrication des lames peut être la suivante : on fait un empilement alterné de plaques ferromagnétiques et amagnétiques. On solidarise toutes les plaques ensemble sous vide en restant au-dessous du point de Curie, par exemple par brasage à l'argent ou soudage au faisceau d'électrons. On tronçonne ensuite l'empilement à l'épaisseur désirée pour les lames.

L'assemblage des lames peut ensuite s'effectuer de façon absolument classique, par serrage entre des étriers.

Les lames du stator peuvent avoir la même constitution que celles qui viennent d'être décrites, en prévoyant des intercalaires ayant une longueur accrue dans le sens de déplacement pour correspondre à l'intervalle entre les bobines. Ces intercalaires sont constitués en matériau ferromagnétique et doivent avoir une dimension telle qu'ils permettent le passage du flux lors du fonctionnement sans arriver à saturation.

Cette même constitution des lames peut être utilisée dans le cas d'une machine rotative. Dans ce cas, les intervalles séparant les lames, montrées en figure 7, seront occupés par un matériau métallique non ferromagnétique tel que de l'acier inoxydable et l'ensemble des lamelles sera solidarisé sous forme d'un disque annulaire ayant des secteurs alternés, par exemple en ferrosilicium et en acier inoxydable. Cette disposition, comme la précédente, est susceptible d'être modifiée pour obtenir un effet Vernier.

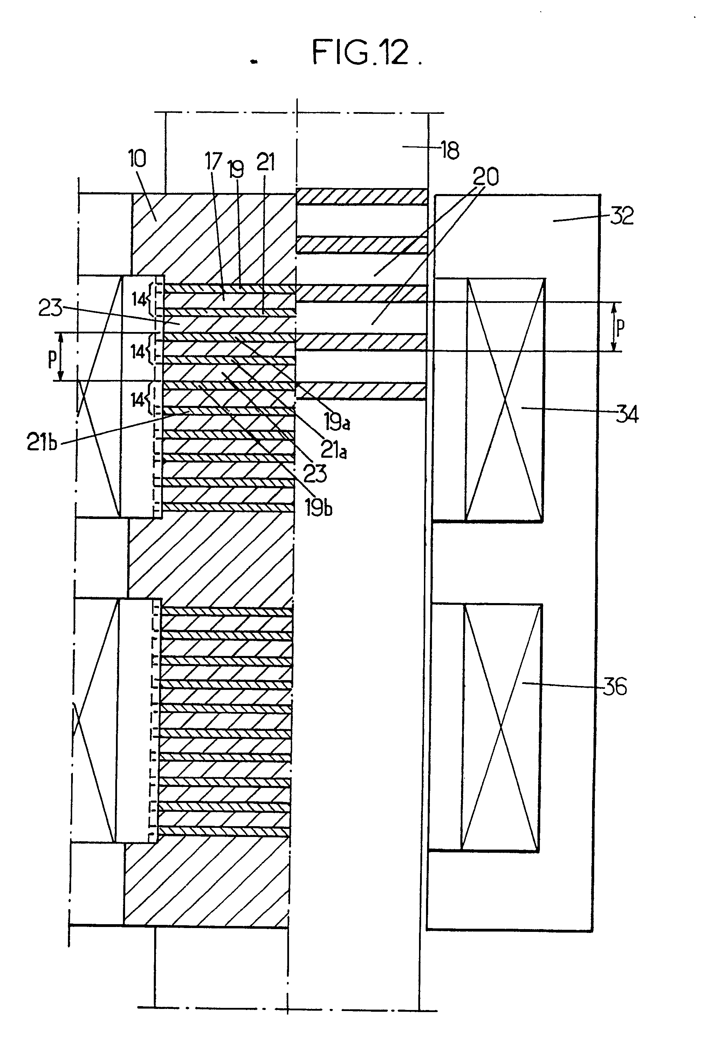

La Figure 12 montre un actionneur linéaire selon l'invention dont les plots 14 d'une lame 10 du stator comportent des aimants longitudinaux 19, 21 d'aimantation alternée encadrant une bande centrale 17 ferromagnétique.

Chaque plot est séparé du suivant par une partie 23 elle-même feromagnétique. Les aimants 31 et 19a, 21a et 19b, etc. successifs appartenant à deux plots différents du stator sont d'aimantation alternée.

Le pas p des plots 14 du stator est le même que le pas p des plots 20 de l'élément mobile dont les lames 18 peuvent être identiques à celles de l'actionneur à réluctance variable sans aimant.

De façon générale, le reste du dispositif (lames du noyau, circuit de retour,..) peut être semblable à celui de l'actionneur sans aimant, avec la possibilité de ramener à deux les bobinages 34, 36 dans le cas d'une machine diphasée.

Dans la réalisation de la Figure 12, la longueur dans le sens du déplacement de chaque plot du poussoir est égale à la longueur dans le sens du déplacement de chaque plot du stator.

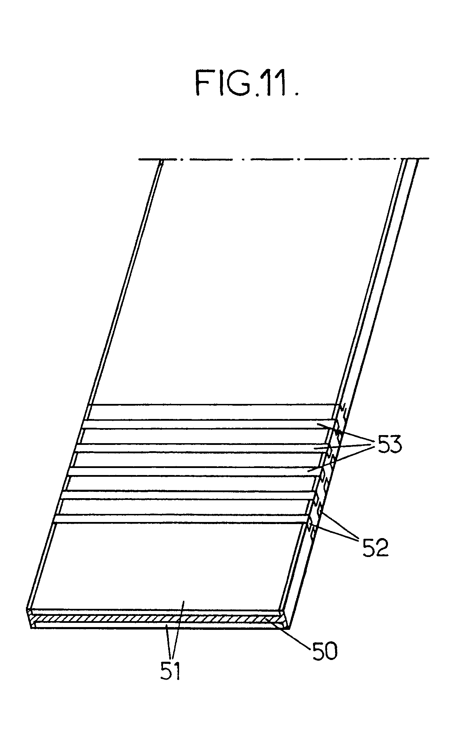

La fabrication des lames du stator à aimant peut être la suivante (Fig. 11) :

on insère, de chaque côté de l'âme d'un profil 50 usiné en I dans de l'acier amagnétique, deux plaques 51 en acier magnétique. Cette insertion peut se faire par brasage à l'argent ou simple collage. Les plaques d'acier magnétique peuvent être feuilletées ou non dans le sens longitudinal suivant la fréquence de fonctionnement,

on usine ensuite par fraisage ou par électroérosion des saignées 52, où des aimants sont collés avec leur aimantation dont le sens est alterné d'un aimant sur l'autre.

L'invention ne se limite évidemment pas aux modes particuliers de réalisation qui ont été représentés et décrits et il doit être entendu que la portée du présent brevet s'étend à toute variante restant dans le cadre de la protection définie par les revendications.

## Revendications

1. Moteur électrique polyphasé à réluctance variable, comportant un noyau ferromagnétique mobile dans un stator muni de $\underline{m}$ d'enroulements (34, 36, 38) de création de flux magnétique dans le sens de déplacement du noyau mobile et une source (40, 42) permettant d'alimenter les enroulements avec un déphasage, chaque enroulement étant associé à un circuit ferromagnétique propre se refermant par le noyau, caractérisé en ce que le noyau comporte plusieurs lames ferromagnétiques minces (18), parallèles au sens de déplacement et fractionnées chacune dans le sens longitudinal en plots (20) avec un pas déterminé $\underline{p}$ et en ce que le circuit ferromagnétique de chaque enroulement comporte également plusieurs lames alternant avec celles du noyau, imbriquées avec elles et fractionnées également en plots (14) au pas $\underline{p}$ des plots du noyau.

2. Moteur électrique selon la revendication 1, caractérisé en ce que les plots du stator comprennent des aimants permanents.

3. Moteur électrique selon la revendication 1 ou 2, caractérisé en ce que les plots (14, 20) sont en forme de lamelles ayant une hauteur nettement supérieure à leur épaisseur.

4. Moteur électrique selon l'une quelconque des revendications précédentes, caractérisé en ce que les plots ont une longueur dans le sens du déplacement nettement supérieure à l'intervalle entre plots successifs.

5. Moteur électrique selon la revendication 2, caractérisé en ce que les plots du stator sont chacun constitués d'une bande ferromagnétique (17) et de deux aimants (19, 21) longitudinaux d'aimantation inverse accolés de part et d'autre de ladite bande, les aimants (21 et 19a, 21a et 19b..) successifs appartenant à deux plots différents étant d'aimantation alternée.

6. Moteur électrique selon l'une quelconque des revendications précédentes, caractérisé en ce que, ce moteur constituant un moteur électrique linéaire, les lames sont portées par une âme commune en matériau non ferromagnétique, par exemple en acier inoxydable, constituant un poussoir et en ce que les enroulements (34, 36, 38) sont associés chacun à un jeu de lames du stator, les lames d'un jeu présentant un décalage de p/m par rapport à un autre jeu.

7. Moteur électrique selon la revendication 6, caractérisé en ce que le noyau mobile comprend une âme amagnétique (15) portant deux séries opposées de lames (18) coopérant chacune avec l'une de deux séries de lames statoriques (10) pour chaque enroulement, et en ce que les enroulements sont portés par une carcasse de fermeture du flux magnétique comportant des lames supplémentaires (30) séparant les séries de lames directement associées à des enroulements différents.

8. Moteur électrique selon la revendication 6, caractérisé en ce que le noyau mobile comprend des lames adjacentes constituées chacune par une alternance de métal ferromagnétique et de métal amagnétique.

9. Moteur électrique selon la revendication 5, caractérisé en ce que la longueur dans le sens du déplacement des plots du poussoir est égale à la longueur dans le sens du déplacement des plots du stator.

10. Moteur électrique selon l'une des revendications 1 à 4, caractérisé en ce que, ce moteur constituant un moteur électrique tournant, les enroulements sont associés à des moyens pour y faire circuler un courant alternatif et un courant continu.

**Ansprüche**

1. Mehrphasiger Elektromotor mit variabler Reluktanz, mit einem ferromagnetischen beweglichen Kern in einem Stator, der mit m Wicklungen (34, 36, 38) versehen ist, die einen magnetischen Fluß in der Bewegungsrichtung des beweglichen Kernes erzeugen, und mit einer Quelle (40, 42) zum phasenversetzten Anspeisen der Wicklungen, wobei jede Wicklung einem eigenen, durch den Kern sich schließenden ferromagnetischen Kreis zugeordnet ist, dadurch gekennzeichnet, daß der Kern mehrere dünne ferromagnetische Lamellen (18) aufweist, die parallel zur Bewegungsrichtung liegen und in Längsrichtung in Sätze (20) mit einer vorbestimmten Schrittweite p unterteilt sind, und daß der ferromagnetische Kreis jeder Wicklung ebenso mehrere Lamellen aufweist, die mit denen des Kernes abwechseln, mit diesen verzahnt sind und ebenso in Sätze (14) mit der Schrittweite p der Sätze des Kernes unterteilt sind.

2. Elektromotor nach Anspruch 1, dadurch gekennzeichnet, daß die Statorsätze Permanentmagnete aufweisen.

3. Elektromotor nach Anspruch 1 oder 2, dadurch gekennzeichnet, daß die Sätze (14, 20) in Form von Lamellen sind, die eine deutlich größere Höhe als Dicke aufweisen.

4. Elektromotor nach einem der vorhergehenden Ansprüche, dadurch gekennzeichnet, daß die Sätze in der Bewegungsrichtung eine Länge haben, die deutlich größer als der Abstand zwischen aufeinanderfolgenden Sätzen ist.

5. Elektromotor nach Anspruch 2, dadurch gekennzeichnet, daß die Statorsätze jeweils aus einem ferromagnetischen Streifen (17) und zwei zu beiden Seiten dieses Streifens angefügten länglichen Magneten (19, 21) mit umgekehrter Magnetisierung gebildet sind, wobei die aufeinanderfolgenden Magnete (21 und 19a, 21a und 19b...), die zwei verschiedenen Sätzen angehören, abwechselnde Magnetisierung aufweisen.

6. Elektromotor nach einem der vorhergehenden Ansprüche, dadurch gekennzeichnet, daß, wenn dieser Motor einen Linearelektromotor bildet, die Lamellen von einem gemeinsamen, eine Vorschubstange bildenden Steg aus nichtferromagnetischem Material, z.B. rostfreiem Stahl, getragen sind, und daß die Wicklungen (34, 36, 38) jeweils einer Gruppe von Statorlamellen zugeordnet sind, wobei die Lamellen einer Gruppe einen Versatz von p/m bezüglich einer anderen Gruppe aufweisen.

7. Elektromotor nach Anspruch 6, dadurch gekennzeichnet, daß der bewegliche Kern einen nicht-magnetischen Steg (15) aufweist, der zwei gegenüberliegende Reihen von Lamellen (18) trägt, die jeweils mit einer von zwei Reihen von Statorlamellen (10) für jede Wicklung zusammenwirken, und daß die Wicklungen von einem Gehäuse getragen sind, das den magnetischen Fluß einschließt und Hilfslamellen (30) aufweist, welche die direkt den verschiedenen Wicklungen zugeordneten Lamellenreihen voneinander trennen.

8. Elektromotor nach Anspruch 6, dadurch gekennzeichnet, daß der bewegliche Kern nebeneinanderliegende Lamellen aufweist, die jeweils durch eine Abfolge eines ferromagnetischen Metalles mit einem nicht-magnetischen Metall gebildet sind.

9. Elektromotor nach Anspruch 5, dadurch gekennzeichnet, daß die Länge der Vorschubstangensätze in der Bewegungsrichtung gleich der Länge der Statorsätze in der Bewegungsrichtung ist.

10. Elektromotor nach einem der Ansprüche 1 bis 4, dadurch gekennzeichnet, daß, wenn der Motor einen Drehelektromotor bildet, die Wicklungen mit Mitteln verbunden sind, um durch sie einen Wechselstrom und einen Gleichstrom zu leiten.

**Claims**

1. A polyphase variable reluctance motor comprising a ferromagnetic core movable within a stator, said stator comprising m windings (34, 36, 38) for creating a magnetic flux in the direction of displacement of said mobile core and electric power source means (40, 42) for energizing the windings with respective phase shifted currents, each one of said windings cooperating with a proper ferromagnetic circuit closing through said core, characterized by said core comprising a plurality of ferromagnetic thin blades (18) parallel oriented with the direction of displacement and each one split up in the longitudinal direction into a plurality of studs (20) spaced with a predetermined pitch p, said proper ferromagnetic circuit of each winding also comprising a plurality of blades alternatively disposed and interleaved with the blades of said core, said plurality of blades being split up into a plurality of studs (14) spaced with said predetermined pitch p.

2. Electric motor according to claim 1, characterized by studs of the stator including permanent magnets.

3. Electric motor according to claim 1, characterized by studs (14, 20) shaped as laminae, each having a height dimension substantially larger than the dimension of its thickness.

4. Electric motor according to one of previous claims, characterized by studs having a length dimension in the direction of displacement substantially larger than the dimension of the space separating respectively said successive studs.

5. Electric motor according to claim 2, characterized by said studs of the stator each formed with a ferromagnetic strip (17) and two longitudinal permanent magnets (19, 21) of opposite magnetization, a first permanent magnet being disposed on the first side of said strip and a second permanent magnet disposed on the second side of said strip, successive permanent magnets (21 and 19a, 21a, 19b...) belonging to two different studs being of opposite magnetization.

6. Electric motor according to one of previous claims, characterized by said motor being an electric linear motor, said blades are carried by a common web made from a non ferromagnetic material, for example stainless steel, said web forming a pusher, said of each windings (34, 36, 38) being respectively associated with a set of blades of said stator, said blades of said set of blades bing off set by p/m with respect to another set.

7. Electric motor according to claim 6, characterized by said mobile core comprising a non-magnetic web (15) carrying two opposite sets of blades (18) each cooperating with one of two sets of blades of said stator (10) for each winding, said windings being carried by a carcass for completing the magnetic circuit, said carcass having additional blades (30) separating the sets of blades directly associated to different windings.

8. Electric motor according to claim 6, characterized by said mobile core including adjacent blades each consisting of an alternance of ferromagnetic and non-magnetic metal.

9. Electric motor according to claim 5, characterized by the length dimension of the studs of the pusher in the direction of displacement egual to the length dimension of the studs of the stator in the same direction.

10. Electric motor according to one of claims 1 to 4, characterized by said motor constituting an electric rotating motor, said windings are associated with energizing means for supplying an a.c. current and a d.c. current.

FIG.1.

FIG.2.

FIG.3.

FIG.4.

EP 0 218 521 B1

FIG.5.

FIG.6

FIG.7.

EP 0 218 521 B1

FIG.8.

34   36   38

18

20

10

14

16

IX

IX

EP 0 218 521 B1

## FIG.9.

## FIG.10.

# FIG.11.

# FIG.12 .